# EUROPEAN PATENT SPECIFICATION

(11) **EP 4 137 682 B1**
(45) Date of publication and mention of the grant of the patent: **02.10.2024**
(21) Application number: 22190503.7
(22) Date of filing: 16.08.2022
(51) Int. Cl.: F01L 1/344, F01L 1/053, F01L 1/24, F01M 9/10, F01M 11/02

(54) **OIL PASSAGE STRUCTURE OF INTERNAL COMBUSTION ENGINE**
ÖLDURCHFLUSSSTRUKTUR EINES VERBRENNUNGSMOTORS
STRUCTURE DE PASSAGE D'HUILE D'UN MOTEUR À COMBUSTION INTERNE

(30) Priority: 19.08.2021 JP 2021134062
(43) Date of publication of application: 22.02.2023
(73) Proprietor: Suzuki Motor Corporation, Hamamatsu-shi, Shizuoka 432-8611 (JP)
(72) Inventor: KANAI, Takuya, 432-8611 Hamamatsu-shi, (JP); OKAMURA, Sho, 432-8611 Hamamatsu-shi, (JP)
(74) Representative: Haseltine Lake Kempner LLP

(56) References cited:
- JP-A- 2016 128 682
- JP-A- 2018 003 694
- US-A1- 2016 208 663
- US-A1- 2019 284 969

## Description

### [Technical Field]

The present invention relates to an oil passage structure of an internal combustion engine.

### [Background Art]

Conventionally, a variable valve timing device to be controlled by a hydraulic pressure to be supplied from a hydraulic control valve has been known (see JP2016-128682A, JP2018-3694A and US 2019/284969 A1).

The variable valve timing device adjusts a rotational phase of a cam shaft relative to a crankshaft based on the hydraulic pressure to be supplied from the hydraulic control valve, and adjusts an opening/closing timing (valve timing) of a valve.

The variable valve timing device described in JP2016-128682A is provided in an end portion of an intake cam shaft and an end portion of an exhaust cam shaft, and the hydraulic control valve is attached to a cam chain cover, and is composed of an electromagnetic hydraulic control valve that supplies a hydraulic pressure to an intake-side variable valve timing device and an exhaust-side variable valve timing device.

A right side wall of a cylinder head is provided with an oil passage that supplies oil to each of an intake-side hydraulic control valve and an exhaust-side hydraulic control valve.

The oil passage includes a main oil passage extending diagonally upward from a bottom surface of the right side wall of the cylinder head and an intake VVT supply passage and an exhaust VVT supply passage that respectively supply oil from the main oil passage to the intake-side hydraulic control valve and the exhaust-side hydraulic control valve.

The oil passage includes an intake-side lash adjuster oil passage that supplies oil to an intake-side lash adjuster and an exhaust-side lash adjuster oil passage that supplies oil to an exhaust-side lash adjuster.

The intake-side lash adjuster oil passage branches off from an internal oil passage of the main oil passage, and oil is supplied to the intake-side lash adjuster oil passage from the internal oil passage.

In the variable valve timing device described in JP2018-3694A, the hydraulic control valve is provided in an end portion of the cam shaft, and an actuator part is installed in an outer peripheral portion of the hydraulic control valve. The actuator part includes a housing constituting an advanced angle chamber and a retarded angle chamber to which oil is to be supplied from the hydraulic control valve and a vane member.

In the variable valve timing device described in JP2018-3694A, the actuator part can be installed in the vicinity of the hydraulic control valve, thereby making it possible to improve responsiveness at the time of change of the valve timing.

### [Citation List]

### [Patent Literature]

[Patent Literature 1] JP2016-128682A
[Patent Literature 2] JP2018-3694A

### [Summary of Invention]

### [Technical Problem]

In an engine including a variable valve timing device, when an intake-side variable valve timing device is operated as soon as possible after the engine is started, this is advantageous in reducing exhaust gas and improving fuel consumption.

To operate the intake-side variable valve timing device soon after starting the engine, oil needs to be quickly supplied to an intake-side hydraulic control valve, and a hydraulic pressure to be supplied to the intake-side hydraulic control valve needs to be accurately detected.

However, in an engine including the variable valve timing device described in JP2016-128682A, it is difficult to early operate the intake-side variable valve timing device due to the following reasons, still leaving room for improvement.

In other words, in the engine including the variable valve timing device described in JP2016-128682A, the intake-side lash adjuster oil passage branches off from the internal oil passage of the main oil passage that supplies oil to the intake VVT supply passage.

Accordingly, the engine is affected by a hydraulic pressure in the intake-side lash adjuster oil passage when started, thereby making it difficult to quickly increase a hydraulic pressure in the intake-side VVT supply passage and making it difficult to early operate the intake-side variable valve timing device, still leaving room for improvement.

In the engine including the variable valve timing device described in JP2016-128682A, if a hydraulic pressure sensor that detects a hydraulic pressure is provided, when the hydraulic pressure sensor is installed at a position spaced apart from the intake-side hydraulic control valve, a hydraulic pressure acting on the intake-side hydraulic control valve may be accurately undetectable.

In other words, in the engine including the variable valve timing device described in each of JP2016-128682A and JP2018-3694A, no consideration is given to quickly supplying oil to the intake-side hydraulic control valve and accurately grasping a hydraulic pressure to be supplied to the intake-side hydraulic control valve, still leaving room for improvement.

The present invention has been made in view of the above-described problems, and is directed to providing an oil passage structure of an internal combustion engine that can quickly operate an intake-side valve timing adjustment device after starting an internal combustion engine, making it possible to reduce exhaust gas and reduce fuel consumption.

### [Solution to Problem]

The present invention provides an oil passage structure of an internal combustion engine including a cylinder head having an end wall provided in an end portion in an axial direction of a crankshaft, a cam cap provided on an upper surface of the end wall, an intake cam shaft to be rotatably supported on an intake-side bearing portion formed on the upper surface of the end wall and the cam cap, an exhaust cam shaft to be rotatably supported on an exhaust-side bearing portion formed on the upper surface of the end wall and the cam cap, an intake-side valve timing adjustment device including an intake-side hydraulic control valve provided in an end portion of the intake cam shaft and an intake-side actuator that is installed in an outer peripheral portion of the intake-side hydraulic control valve and adjusts a rotational phase of the intake cam shaft relative to the crankshaft using oil to be supplied from the intake-side hydraulic control valve, an exhaust-side valve timing adjustment device including an exhaust-side hydraulic control valve provided in an end portion of the exhaust cam shaft and an exhaust-side actuator that is installed in an outer peripheral portion of the exhaust-side hydraulic control valve and adjusts a rotational phase of the exhaust cam shaft relative to the crankshaft using oil to be supplied from the exhaust-side hydraulic control valve, a plurality of lash adjusters installed in the cylinder head to be positioned in a vicinity of the intake cam shaft and the exhaust cam shaft, a main oil passage provided on the end wall and to be supplied with oil from a hydraulic pressure source, a lash adjuster oil passage that supplies oil to the plurality of lash adjusters from the main oil passage, an intake-side hydraulic control valve oil passage that supplies oil to the intake-side hydraulic control valve from the main oil passage through an intake-side cam cap internal oil passage formed in the cam cap and an intake cam shaft internal oil passage formed in the intake cam shaft, an exhaust-side hydraulic control valve oil passage that supplies oil to the exhaust-side hydraulic control valve from the main oil passage through an exhaust-side cam cap internal oil passage provided in the cam cap and an exhaust cam shaft internal oil passage provided in the exhaust cam shaft, and a hydraulic pressure sensor to be attached to the cylinder head, in which the intake-side cam cap internal oil passage is installed on an opposite side to the exhaust-side bearing portion with respect to the intake-side bearing portion, the exhaust-side cam cap internal oil passage is installed between the intake-side bearing portion and the exhaust-side bearing portion, the intake-side hydraulic control valve oil passage includes an intake-side head oil passage provided on the end wall, the intake-side head oil passage branching off from the main oil passage and communicating with the intake-side cam cap internal oil passage, the exhaust-side hydraulic control valve oil passage includes an exhaust-side head oil passage provided on the end wall, the exhaust-side head oil passage branching off from the main oil passage and communicating with the exhaust-side cam cap internal oil passage, the lash adjuster oil passage communicates with the exhaust-side cam cap internal oil passage by a communication oil passage, and the hydraulic pressure sensor is attached to the intake-side head oil passage.

### [Advantageous Effects of Invention]

Thus, according to the present invention, described above, the intake-side valve timing adjustment device can be quickly operated after the internal combustion engine is started, making it possible to reduce exhaust gas and reduce fuel consumption.

### [Brief Description of Drawings]

[Figure 1] Figure 1 is a front view of an internal combustion engine according to an embodiment of the present invention.
[Figure 2] Figure 2 is a top view of the internal combustion engine according to the embodiment of the present invention, illustrating a state where a cylinder head cover has been removed.
[Figure 3] Figure 3 is a right side view of an upper portion of the internal combustion engine according to the embodiment of the present invention.
[Figure 4] Figure 4 is a cross-sectional view taken along a line IV-IV illustrated in Figure 3.
[Figure 5] Figure 5 is a top view of the internal combustion engine according to the embodiment of the present invention, illustrating a state where the cylinder head cover and a cam cap on a front wall side of a cylinder head have been removed.
[Figure 6] Figure 6 is a front view of an upper portion of the cylinder head in the internal combustion engine according to the embodiment of the present invention.
[Figure 7] Figure 7 is a cross-sectional view taken along a line VII-VII illustrated in Figure 5.
[Figure 8] Figure 8 is a cross-sectional view taken along a line VIII-VIII illustrated in Figure 5.
[Figure 9] Figure 9 is a cross-sectional view taken along a line IX-IX illustrated in Figure 7.

### [Description of Embodiment]

An oil passage structure of an internal combustion engine according to an embodiment of the present invention is an oil passage structure of an internal combustion engine including a cylinder head having an end wall provided in an end portion in an axial direction of a crankshaft, a cam cap provided on an upper surface of the end wall, an intake cam shaft to be rotatably supported on an intake-side bearing portion formed on the upper surface of the end wall and the cam cap, an exhaust cam shaft to be rotatably supported on an exhaust-side bearing portion formed on the upper surface of the end wall and the cam cap, an intake-side valve timing adjustment device including an intake-side hydraulic control valve provided in an end portion of the intake cam shaft and an intake-side actuator that is installed in an outer peripheral portion of the intake-side hydraulic control valve and adjusts a rotational phase of the intake cam shaft relative to the crankshaft using oil to be supplied from the intake-side hydraulic control valve, an exhaust-side valve timing adjustment device including an exhaust-side hydraulic control valve provided in an end portion of the exhaust cam shaft and an exhaust-side actuator that is installed in an outer peripheral portion of the exhaust-side hydraulic control valve and adjusts a rotational phase of the exhaust cam shaft relative to the crankshaft using oil to be supplied from the exhaust-side hydraulic control valve, a plurality of lash adjusters installed in the cylinder head to be positioned in a vicinity of the intake cam shaft and the exhaust cam shaft, a main oil passage provided on the end wall and to be supplied with oil from a hydraulic pressure source, a lash adjuster oil passage that supplies oil to the plurality of lash adjusters from the main oil passage, an intake-side hydraulic control valve oil passage that supplies oil to the intake-side hydraulic control valve from the main oil passage through an intake-side cam cap internal oil passage formed in the cam cap and an intake cam shaft internal oil passage formed in the intake cam shaft, an exhaust-side hydraulic control valve oil passage that supplies oil to the exhaust-side hydraulic control valve from the main oil passage through an exhaust-side cam cap internal oil passage provided in the cam cap and an exhaust cam shaft internal oil passage provided in the exhaust cam shaft, and a hydraulic pressure sensor to be attached to the cylinder head, in which the intake-side cam cap internal oil passage is installed on an opposite side to the exhaust-side bearing portion with respect to the intake-side bearing portion, the exhaust-side cam cap internal oil passage is installed between the intake-side bearing portion and the exhaust-side bearing portion, the intake-side hydraulic control valve oil passage includes an intake-side head oil passage provided on the end wall, the intake-side head oil passage branching off from the main oil passage and communicating with the intake-side cam cap internal oil passage, the exhaust-side hydraulic control valve oil passage includes an exhaust-side head oil passage provided on the end wall, the exhaust-side head oil passage branching off from the main oil passage and communicating with the exhaust-side cam cap internal oil passage, the lash adjuster oil passage communicates with the exhaust-side cam cap internal oil passage by a communication oil passage, and the hydraulic pressure sensor is attached to the intake-side head oil passage.

As a result, the oil passage structure of the internal combustion engine according to the embodiment of the present invention can quickly operate the intake-side valve timing adjustment device after starting the internal combustion engine, making it possible to reduce exhaust gas and reduce fuel consumption.

### [Embodiment]

An embodiment of an oil passage structure of an internal combustion engine according to the present invention will be described below with reference to the drawings.

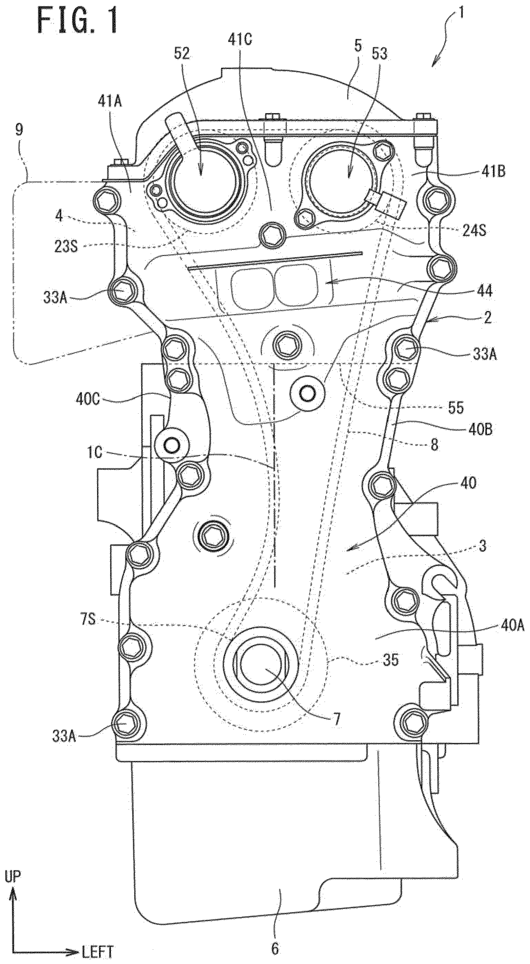

Figure 1 to Figure 9 are diagrams each illustrating an oil passage structure of an internal combustion engine according to the embodiment of the present invention. In Figure 1 to Figure 9, up-down, front-rear, and left-right directions are defined as follows.

A direction along a crankshaft is set as a front-rear direction of an engine, and the side on which a timing chain is arranged is set as the front side and the opposite side thereof is set as the rear side. A direction along a center axis of a cylinder is set as an up-down direction of the engine, and the side of a cylinder head is set as the upper side and the opposite side thereof is set as the lower side. A direction intersecting the crankshaft and the center axis of the cylinder is set as a left-right direction of the engine, and the left side of the center axis of the cylinder and the right side of the center axis of the cylinder with the crankshaft viewed from the rear side are respectively set as the left side and the right side.

First, a configuration will be described.

In Figure 1, an engine 1 includes an engine main body 2 and a chain cover 40. The engine main body 2 includes a cylinder block 3, a cylinder head 4, a cylinder head cover 5, and an oil pan 6. The engine 1 in the present embodiment constitutes an internal combustion engine. A virtual line 55 illustrated in Figure 1 is a boundary between the cylinder block 3 and the cylinder head 4.

The cylinder block 3 is provided with a plurality of cylinders not illustrated, and the cylinders are installed side by side in a front-rear direction of the engine 1. The engine 1 is installed such that a center axis 1C of the cylinders extends in its up-down direction.

A piston not illustrated is accommodated in each of the cylinders. The piston is connected to a crankshaft 7 with a connecting rod not illustrated interposed therebetween. The crankshaft 7 has a rotational center axis extending in its front-rear direction, and rotates around the rotational center axis.

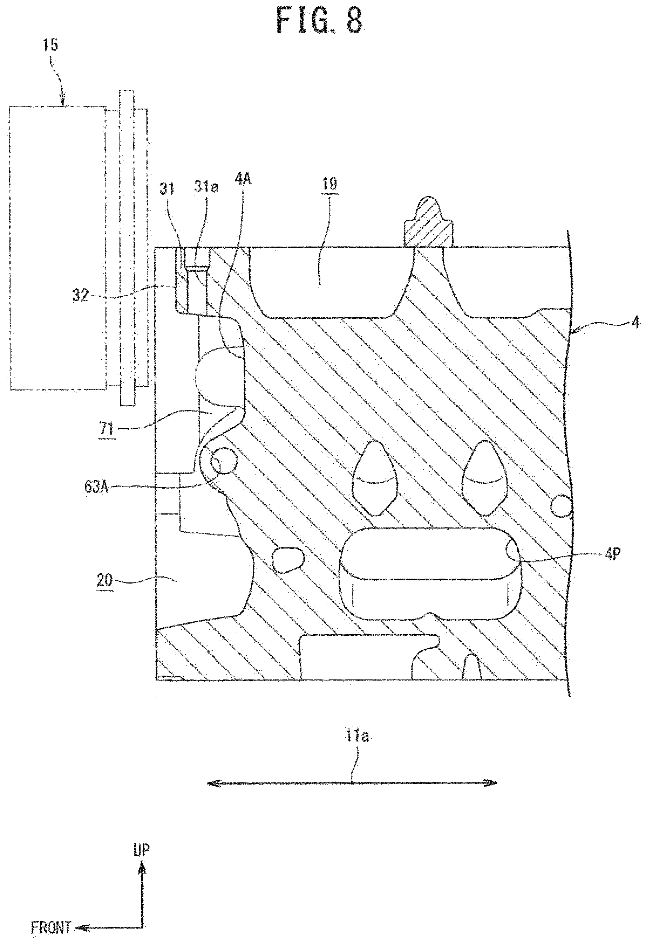

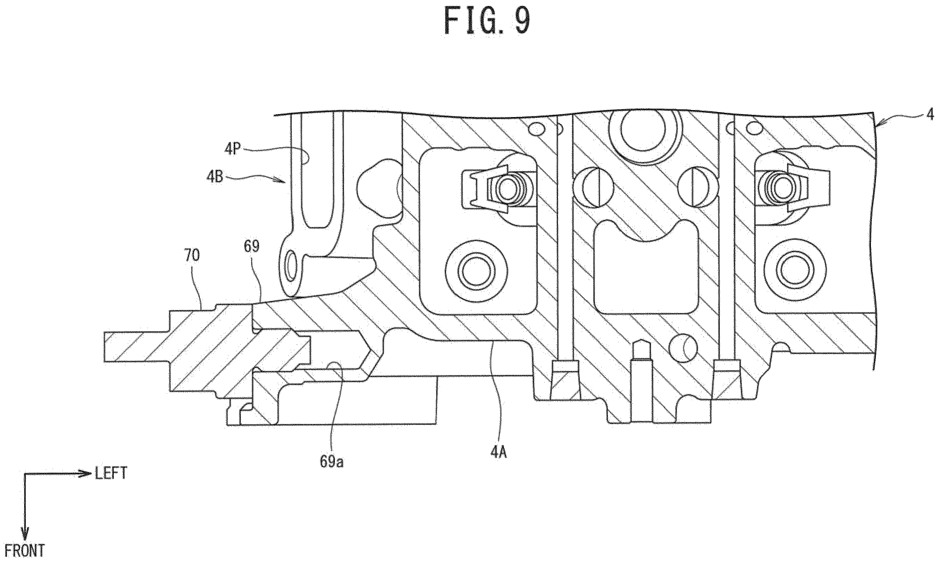

A piston reciprocates in the cylinder, to rotate the crankshaft 7 via a connecting rod. A plurality of intake ports 4P (one intake port is illustrated in Figure 8 and Figure 9) and a plurality of exhaust ports not illustrated are formed in the cylinder head 4.

The intake ports 4P respectively communicate with the cylinders, to introduce incoming air into the cylinders. An exhaust manifold communicates with the plurality of cylinders, respectively, through the exhaust ports, and collects respective exhaust gases released from the plurality of cylinders and releases the exhaust gases to a catalyst converter not illustrated from an exhaust port.

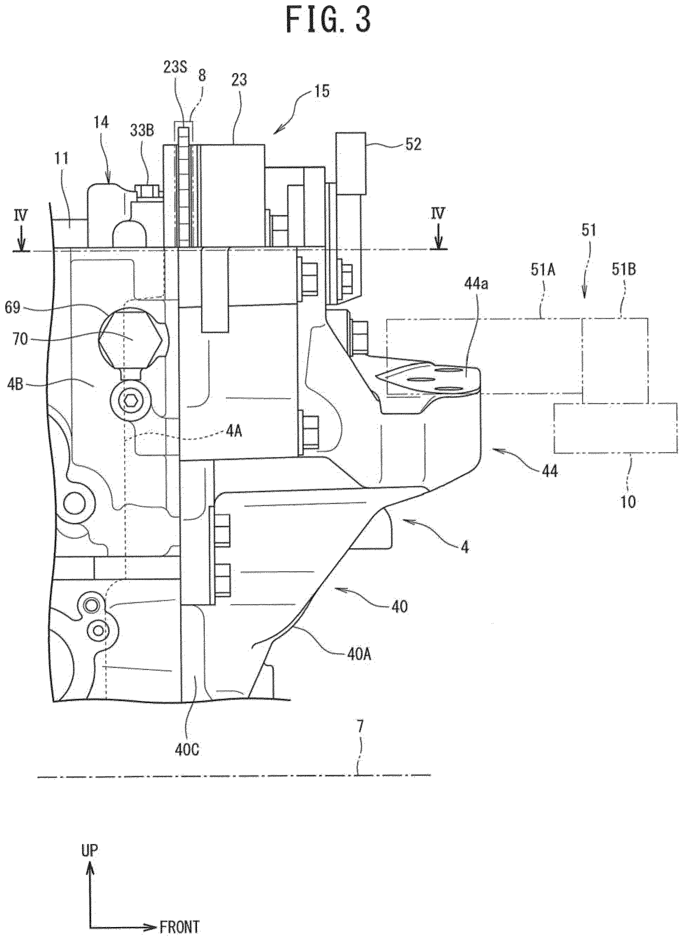

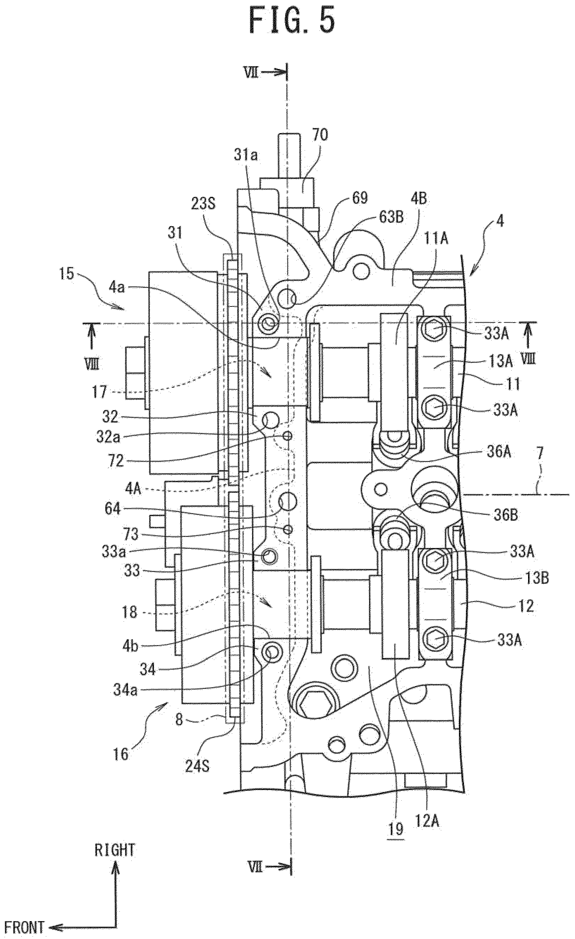

As illustrated in Figure 3 and Figure 5, the cylinder head 4 has a front wall 4A and an intake-side wall 4B. The front wall 4A is provided in a front end portion (end portion) in an axial direction of the crankshaft 7, and the intake-side wall 4B is provided on a right side surface (side surface) of the cylinder head 4 in a width direction perpendicular to the axial direction of the crankshaft 7. The front wall 4A in the present embodiment constitutes an end wall.

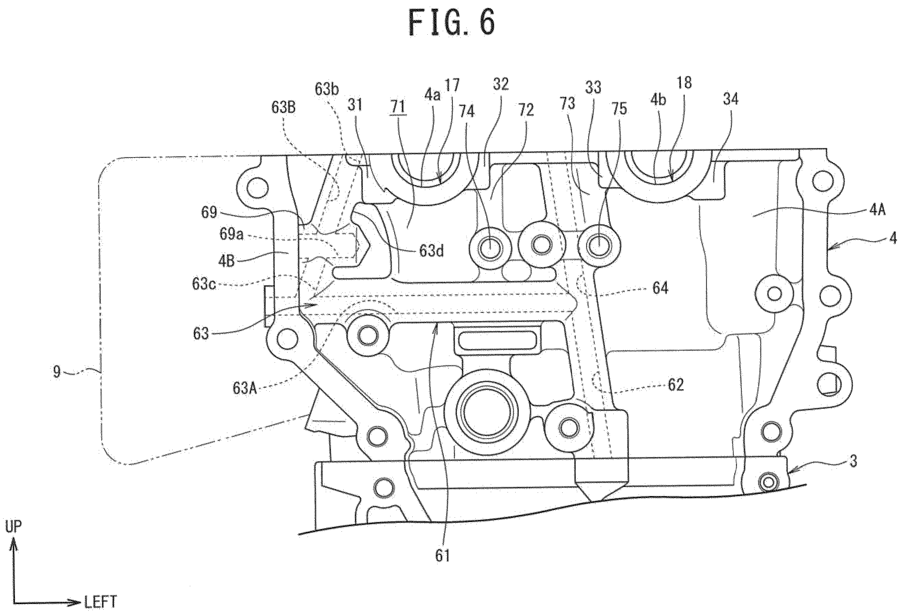

An intake manifold 9 (indicated by a virtual line in Figure 1 and Figure 6) is attached to the intake-side wall 4B of the cylinder head 4. The intake manifold 9 is cleaned by an air cleaner not illustrated, and then distributes air sucked into an intake pipe not illustrated among the intake ports 4P in the cylinder head 4.

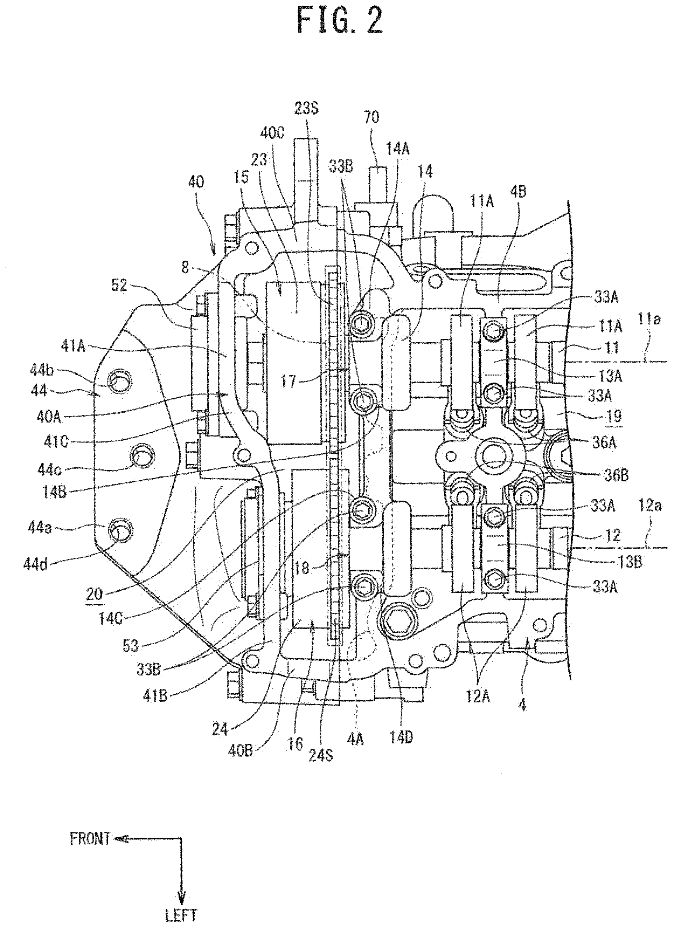

A valve chamber 19 is formed in the cylinder head 4 and the cylinder head cover 5, and an intake cam shaft 11 and an exhaust cam shaft 12 are rotatably supported on the cylinder head 4 (see Figure 2). That is, the intake cam shaft 11 and the exhaust cam shaft 12 are installed in the valve chamber 19.

As illustrated in Figure 2, the intake cam shaft 11 and the exhaust cam shaft 12 are installed side by side in the left-right direction of the engine 1 such that their respective rotational center axes 11a and 12a extend parallel to the front-rear direction of the engine 1.

The intake cam shaft 11 includes a plurality of intake cams 11A (two intake cams are illustrated), and the intake cams 11A are installed side by side in a direction of the rotational center axis 11a of the intake cam shaft 11.

The plurality of (e.g., two) intake cams 11A are provided for each of the cylinders. Each of the intake ports 4P is provided with an intake valve not illustrated, and each of the intake cams 11A operates the intake valve and opens and closes the intake port 4P, to allow the cylinder and the intake port 4P to communicate with or discommunicate with each other.

The exhaust cam shaft 12 includes a plurality of exhaust cams 12A (two exhaust cams are illustrated), and the exhaust cams 12A are installed side by side in a direction of the rotational center axis 12a of the exhaust cam shaft 12. The direction of the rotational center axes 11a and 12a is hereinafter referred to as an axial direction.

The plurality of (e.g., two) exhaust cams 12A are provided for each of the cylinders. Each of the exhaust ports is provided with an exhaust valve not illustrated, and each of the exhaust cams 12A operates the exhaust valve and opens and closes the exhaust port, to allow the cylinder and the exhaust port to communicate with or discommunicate with each other.

As illustrated in Figure 2, an intake cam cap 13A, an exhaust cam cap 13B, and a cam cap 14 are attached to an upper surface of the cylinder head 4. The intake cam cap 13A and the exhaust cam cap 13B are respectively installed between the intake cams 11A and between the exhaust cams 12A provided for each of the cylinders in the axial direction of the intake cam shaft 11 and the exhaust cam shaft 12.

Respective inner peripheral surfaces of the intake cam cap 13A and the exhaust cam cap 13B are respectively provided with an intake cam bearing surface and an exhaust cam bearing surface not illustrated. The upper surface of the cylinder head 4 opposing the intake cam bearing surface and the exhaust cam bearing surface is provided with an intake cam bearing surface and an exhaust cam bearing surface not illustrated.

Each of the intake cam cap 13A and the exhaust cam cap 13B is fixed to the upper surface of the cylinder head 4 with bolts 33A. The intake cam shaft 11 is rotatably supported on the intake cam bearing surface of the intake cam cap 13A and the intake cam bearing surface of the cylinder head 4.

The exhaust cam shaft 12 is rotatably supported on the exhaust cam bearing surface of the exhaust cam cap 13B and the exhaust cam bearing surface of the cylinder head 4.

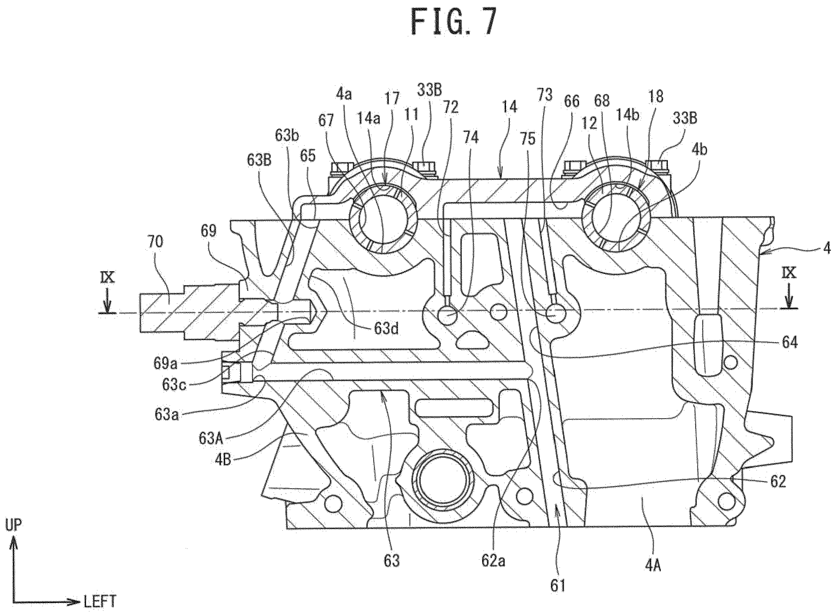

As illustrated in Figure 5 and Figure 6, an intake-side bearing surface 4a and an exhaust-side bearing surface 4b are provided on an upper surface of the front wall 4A. As illustrated in Figure 7, an intake-side bearing surface 14a and an exhaust-side bearing surface 14b are provided on an inner peripheral surface of the cam cap 14.

The intake cam shaft 11 is rotatably supported on the intake-side bearing surface 4a of the front wall 4A and the intake-side bearing surface 14a of the cam cap 14, and the exhaust cam shaft 12 is rotatably supported on the exhaust-side bearing surface 4b of the front wall 4A and the exhaust-side bearing surface 14b of the cam cap 14.

In the present embodiment, the intake-side bearing surface 4a and the intake-side bearing surface 14a constitute an intake-side bearing portion 17, and the exhaust-side bearing surface 4b and the exhaust-side bearing surface 14b constitute an exhaust-side bearing portion 18.

As illustrated in Figure 2 and Figure 7, the cam cap 14 is fixed to the upper surface of the front wall 4A of the cylinder head 4 with bolts 33B.

As illustrated in Figure 5 and Figure 6, an upper end portion of the front wall 4A of the cylinder head 4 is provided with bolt attachment bosses 31 and 32. The bolt attachment bosses 31 and 32 are respectively installed in both side portions of the intake-side bearing portion 17 (both side portions in the left-right direction of the engine 1), and the intake-side bearing portion 17 is formed between the bolt attachment bosses 31 and 32 in the left-right direction of the engine 1.

Screw grooves 31a and 32a into which the bolts 33B are to be screwed are respectively formed on inner peripheral surfaces of the bolt attachment bosses 31 and 32.

The upper end portion of the front wall 4A of the cylinder head 4 is provided with bolt attachment bosses 33 and 34. The bolt attachment bosses 33 and 34 are respectively installed in both side portions of the exhaust-side bearing portion 18 (both side portions in the left-right direction of the engine 1), and the exhaust-side bearing portion 18 is formed between the bolt attachment bosses 33 and 34 in the left-right direction of the engine 1.

Screw grooves 33a and 34a into which the bolts 33B are to be screwed are respectively formed on inner peripheral surfaces of the bolt attachment bosses 33 and 34.

As illustrated in Figure 2, the cam cap 14 is provided with bosses 14A, 14B, 14C, and 14D into which the bolts 33B are to be respectively inserted. The cam cap 14 is attached to the upper surface of the front wall 4A when the bolts 33B are respectively screwed into the screw grooves 31a, 32a, 33a, and 34a through the bosses 14A, 14B, 14C, and 14D.

As illustrated in Figure 2 and Figure 3, an intake-side valve timing adjustment device 15 is attached to a front end portion (end portion) in the axial direction of the intake cam shaft 11. The intake-side valve timing adjustment device 15 includes an intake-side housing member 23, and an outer peripheral portion of the intake-side housing member 23 is provided with an intake sprocket 23S.

As illustrated in Figure 2, an exhaust-side valve timing adjustment device 16 is attached to a front end portion (end portion) in the axial direction of the exhaust cam shaft 12. The exhaust-side valve timing adjustment device 16 includes an exhaust-side housing member 24, and an outer peripheral portion of the exhaust-side housing member 24 is provided with an exhaust sprocket 24S.

In the axial direction of the intake cam shaft 11 and the exhaust cam shaft 12, the length of the intake-side housing member 23 is made larger than the length of the exhaust-side housing member 24.

As illustrated in Figure 1, the front end portion of the crankshaft 7 is provided with a crank sprocket 7S. A timing chain 8 is wound around the crank sprocket 7S, the intake sprocket 23S, and the exhaust sprocket 24S.

Power of the crankshaft 7 is transmitted to the intake cam shaft 11 and the exhaust cam shaft 12 via the timing chain 8. As a result, the intake cam shaft 11 rotates so that the intake valve is opened or closed by the intake cam 11A, and the exhaust cam shaft 12 rotates so that the exhaust valve is opened or closed by the exhaust cam 12A.

The intake-side valve timing adjustment device 15 adjusts a rotational phase of the intake cam shaft 11 relative to the crankshaft 7, and adjusts an opening/closing timing (valve timing) of the intake valve.

The exhaust-side valve timing adjustment device 16 adjusts a rotational phase of the exhaust cam shaft 12 relative to the crankshaft 7, and adjusts an opening/closing timing (valve timing) of the exhaust valve.

As illustrated in Figure 1, the cylinder block 3 is provided with an oil pump 35. The oil pump 35 supplies oil to be stored in the oil pan 6 to each of portions of the engine 1 upon being driven by the crankshaft 7. The oil pump 35 in the present embodiment constitutes a hydraulic pressure source.

The chain cover 40 is attached to a front end portion (end portion) of the cylinder block 3 and a front end portion (end portion) of the cylinder head 4.

A length in an up-down direction of the chain cover 40 is made larger than a length in a left-right direction of the chain cover 40 such that a direction of the chain cover 40 along the up-down direction of the engine 1 is a longitudinal direction and a direction along the left-right direction of the engine 1 is a direction perpendicular to the longitudinal direction. As illustrated in Figure 1 to Figure 3, the chain cover 40 has a vertical wall 40A, a left side wall 40B, and a right side wall 40C.

The vertical wall 40A opposes the front end portion of each of the cylinder block 3 and the cylinder head 4 in the axial direction of the intake cam shaft 11 and the exhaust cam shaft 12.

The left side wall 40B and the right side wall 40C respectively protrude toward the engine main body 2 from a left end portion and a right end portion in the direction perpendicular to the longitudinal direction of the chain cover 40 (the left-right direction of the chain cover 40), and their distal end portions in a protrusion direction are respectively fastened to the front end portion of the cylinder block 3 and the front end portion of the cylinder head 4 with the plurality of bolts 33A (see Figure 1). As a result, the chain cover 40 is fixed to the engine main body 2.

As illustrated in Figure 2, a chain chamber 20 is formed between the cylinder block 3 and the cylinder head 4, and the chain cover 40, and the timing chain 8, the intake-side valve timing adjustment device 15, and the exhaust-side valve timing adjustment device 16 are accommodated in the chain chamber 20.

In Figure 2, Figure 3, and Figure 5, the timing chain 8 is indicated by a virtual line. The chain cover 40 in the present embodiment constitutes a cover member.

As illustrated in Figure 1 and Figure 2, an intake-side vertical wall portion 41A and an exhaust-side vertical wall portion 41B are provided in an upper portion of the vertical wall 40A of the chain cover 40, and the intake-side vertical wall portion 41A and the exhaust-side vertical wall portion 41B are installed in parallel in a width direction (the direction perpendicular to the longitudinal direction) of the chain cover 40.

The intake-side vertical wall portion 41A opposes the intake-side valve timing adjustment device 15 in the axial direction of the intake cam shaft 11, and covers the intake-side valve timing adjustment device 15.

The exhaust-side vertical wall portion 41B opposes the exhaust-side valve timing adjustment device 16 in the axial direction of the exhaust cam shaft 12, and covers the exhaust-side valve timing adjustment device 16.

The exhaust-side vertical wall portion 41B is recessed toward the engine main body 2 side with respect to the intake-side vertical wall portion 41A.

That is, the exhaust-side vertical wall portion 41B is recessed to come closer to the engine main body 2 side with respect to the intake-side vertical wall portion 41A, and the intake-side vertical wall portion 41A protrudes to separate from the engine main body 2 with respect to the exhaust-side vertical wall portion 41B.

The intake-side vertical wall portion 41A and the exhaust-side vertical wall portion 41B are connected to each other by a stepped portion 41C having steps in the axial direction of the intake cam shaft 11. That is, the intake-side vertical wall portion 41A and the exhaust-side vertical wall portion 41B are spaced apart from each other in the axial direction of the intake cam shaft 11 and the exhaust cam shaft 12 by the stepped portion 41C.

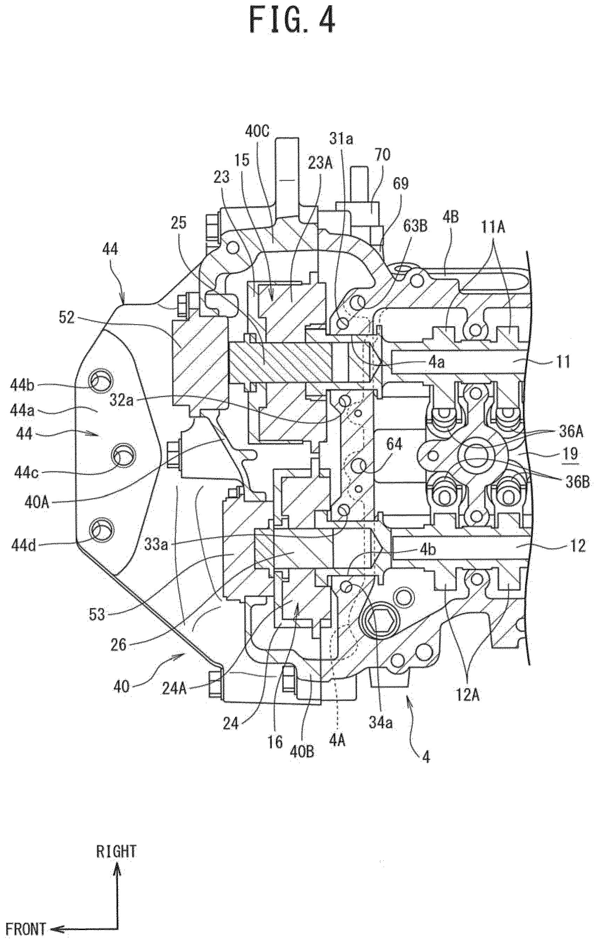

As illustrated in Figure 4, an intake-side vane rotor 23A is accommodated in the intake-side housing member 23, and the intake-side vane rotor 23A rotates integrally with the intake cam shaft 11. The intake-side vane rotor 23A partitions the inside of the intake-side housing member 23 into a plurality of advanced angle chambers and a plurality of retarded angle chambers not illustrated.

The intake-side valve timing adjustment device 15 is provided with an intake-side spool valve 25.

The intake-side spool valve 25 has a valve member that is installed on the rotational center axis 11a of the intake cam shaft 11, rotates integrally with the intake cam shaft 11, and is movable in the axial direction of the intake cam shaft 11.

As illustrated in Figure 1, the intake-side vertical wall portion 41A in the chain cover 40 is provided with an intake-side solenoid 52. As illustrated in Figure 4, the intake-side solenoid 52 is attached to the intake-side vertical wall portion 41A to oppose the intake-side spool valve 25 in the axial direction of the intake cam shaft 11.

The intake-side solenoid 52 operates the intake-side spool valve 25 such that the valve member of the intake-side spool valve 25 moves in the axial direction of the intake cam shaft 11.

When the intake-side solenoid 52 moves the valve member of the intake-side spool valve 25 to a position on the advanced angle chamber side in the axial direction of the intake cam shaft 11, oil to be supplied from the oil pump 35 is supplied to the advanced angle chambers. An oil passage from the oil pump 35 to the intake-side valve timing adjustment device 15 will be described below.

When oil is supplied to the advanced angle chambers, the intake-side vane rotor 23A rotates relative to the intake-side housing member 23. As a result, a rotational phase of the intake cam shaft 11 relative to the crankshaft 7 is adjusted to the advanced angle side, and an opening/closing timing of the intake valve is adjusted to the advanced angle side.

When the intake-side solenoid 52 moves the valve member of the intake-side spool valve 25 to a position on the retarded angle chamber side in the axial direction of the intake cam shaft 11, oil to be supplied from the oil pump 35 is supplied to the retarded angle chambers.

When oil is supplied to the retarded angle chambers, the intake-side vane rotor 23A rotates relative to the intake-side housing member 23. As a result, a rotational phase of the intake cam shaft 11 relative to the crankshaft 7 is adjusted to the retarded angle side, and an opening/closing timing of the intake valve is adjusted to the retarded angle side.

Thus, the intake-side spool valve 25 and the intake-side solenoid 52 in the present embodiment operate the intake-side valve timing adjustment device 15 using oil, and adjusts a rotational phase of the intake cam shaft 11 relative to the crankshaft 7.

The intake-side spool valve 25 in the present embodiment constitutes an intake-side hydraulic control valve. The intake-side housing member 23 and the intake-side vane rotor 23A are installed in an outer peripheral portion of the intake-side spool valve 25, and constitute an intake-side actuator that adjusts a rotational phase of the intake cam shaft 11 relative to the crankshaft 7 using oil to be supplied from the intake-side spool valve 25.

An exhaust-side vane rotor 24A is accommodated in the exhaust-side housing member 24, and the exhaust-side vane rotor 24A rotates integrally with the exhaust cam shaft 12. The exhaust-side vane rotor 24A partitions the inside of the exhaust-side housing member 24 into a plurality of advanced angle chambers and a plurality of retarded angle chambers not illustrated.

As illustrated in Figure 4, the exhaust-side valve timing adjustment device 16 is provided with an exhaust-side spool valve 26. The exhaust-side spool valve 26 has a valve member that is installed on the rotational center axis 12a of the exhaust cam shaft 12, rotates integrally with the exhaust cam shaft 12, and is movable in the axial direction of the exhaust cam shaft 12.

As illustrated in Figure 1, the exhaust-side vertical wall portion 41B in the chain cover 40 is provided with an exhaust-side solenoid 53. As illustrated in Figure 4, the exhaust-side solenoid 53 is attached to the exhaust-side vertical wall portion 41B to oppose the exhaust-side spool valve 26 in the axial direction of the exhaust cam shaft 12.

The exhaust-side spool valve 26 is operated by the exhaust-side solenoid 53, to supply oil to either the advanced angle chambers or the retarded angle chambers, like in the intake-side valve timing adjustment device 15. As a result, a rotational phase of the exhaust cam shaft 12 relative to the crankshaft 7 is adjusted to the advanced angle side or the retarded angle side, and an opening/closing timing of the exhaust valve is adjusted to the advanced angle side or the retarded angle side.

The exhaust-side spool valve 26 in the present embodiment constitutes an exhaust-side hydraulic control valve. The exhaust-side housing member 24 and the exhaust-side vane rotor 24A are installed in an outer peripheral portion of the exhaust-side spool valve 26, and constitute an exhaust-side actuator that adjusts a rotational phase of the exhaust cam shaft 12 relative to the crankshaft 7 using oil to be supplied from the exhaust-side spool valve 26.

As illustrated in Figure 1 and Figure 3, an upper portion of the vertical wall 40A of the chain cover 40 is provided with a mount attachment part 44.

The mount attachment part 44 is positioned below the intake-side vertical wall portion 41A and the exhaust-side vertical wall portion 41B, and protrudes in a direction away from the engine main body 2 (forward) with respect to the chain cover 40.

As illustrated in Figure 3, a side member 10 is provided in front of the engine 1, and the side member 10 extends in its front-rear direction.

A distal end portion of the mount attachment part 44 is provided with an attachment seat 44a. As illustrated in Figure 2 and Figure 4, bolt holes 44b, 44c, and 44d to which bolts as fasteners not illustrated are to be respectively fastened are formed in the attachment seat 44a.

As illustrated in Figure 3, a mount member 51 is attached to the attachment seat 44a. The mount member 51 includes a mount bracket 51A, and a bolt is inserted into a rear end portion of the mount bracket 51A.

The bolt inserted into the rear end portion of the mount bracket 51A is fastened to the bolt holes 44b, 44c, and 44d. As a result, the rear end portion of the mount bracket 51A is fixed to the attachment seat 44a.

The mount member 51 includes a vibration absorbing member 51B, and the vibration absorbing member 51B is attached to the side member 10. A front end portion of the mount bracket 51A is attached to the vibration absorbing member 51B, and the engine main body 2 is elastically supported on the side member 10 with the mount member 51 interposed therebetween.

As a result, the vibration of the engine 1 can be absorbed by the mount member 51, and vibration to be transmitted to the side member 10 from the engine 1 can be suppressed. As illustrated in Figure 6 and Figure 7, the front wall 4A of the cylinder head 4 is provided with an oil passage 61.

The oil passage 61 includes a main oil passage 62, an intake-side head oil passage 63, an exhaust-side head oil passage 64, an intake-side cam cap internal oil passage 65, an exhaust-side cam cap internal oil passage 66, an intake cam shaft internal oil passage 67, and an exhaust cam shaft internal oil passage 68.

The main oil passage 62 linearly extends in its up-down direction toward the upper surface from a lower surface of the cylinder head 4, and oil is supplied to the main oil passage 62 from the oil pump 35. The upstream side of the main oil passage 62 communicates with a block-side oil passage not illustrated provided in the cylinder block 3, and the block-side oil passage introduces oil to be discharged from the oil pump 35 into the main oil passage 62. "Upstream" and "downstream" respectively means being "upstream of" and "downstream of" a direction in which oil flows.

The intake-side head oil passage 63 branches off from the main oil passage 62 and leads to the upper surface of the front wall 4A. Specifically, as illustrated in Figure 7, the intake-side head oil passage 63 includes a first intake-side head oil passage 63A linearly extending toward the intake-side wall 4B from a branch part 62a of the main oil passage 62 and a second intake-side head oil passage 63B linearly extending upward from an outer end portion 63a in a direction in which the first intake-side head oil passage 63A extends and leads to the intake-side cam cap internal oil passage 65.

The exhaust-side head oil passage 64 branches off from the branch part 62a of the main oil passage 62 and linearly extends upward from the branch part 62a, and leads to the upper surface of the front wall 4A. That is, the exhaust-side head oil passage 64 is coaxially formed such that its central axis is the same as that of the main oil passage 62, and the exhaust-side head oil passage 64 and the main oil passage 62 linearly extend in their up-down direction.

The main oil passage 62 in the cylinder head 4 is composed of an oil passage from a lower end of the front wall 4A to the branch part 62a from which the intake-side head oil passage 63 and the exhaust-side head oil passage 64 branch off.

Thus, the main oil passage 62 and the exhaust-side head oil passage 64 in the present embodiment linearly extend upward toward the exhaust-side cam cap internal oil passage 66 from below the exhaust-side cam cap internal oil passage 66.

The intake-side cam cap internal oil passage 65 is provided in the cam cap 14, and allows the second intake-side head oil passage 63B and the intake cam shaft internal oil passage 67 to communicate with each other. The intake cam shaft internal oil passage 67 is provided in the end portion of the intake cam shaft 11, and allows the second intake-side head oil passage 63B and an oil passage of the intake-side spool valve 25 to communicate with each other.

The intake-side spool valve 25 is controlled by the intake-side solenoid 52, to supply oil to be supplied from the intake cam shaft internal oil passage 67 to the advanced angle chambers or the retarded angle chambers in the intake-side valve timing adjustment device 15.

The exhaust-side cam cap internal oil passage 66 is provided in the cam cap 14, and allows the exhaust-side head oil passage 64 and the exhaust cam shaft internal oil passage 68 to communicate with each other. The exhaust cam shaft internal oil passage 68 is provided in the end portion of the exhaust cam shaft 12, and allows the exhaust-side head oil passage 64 and an oil passage of the exhaust-side spool valve 26 to communicate with each other.

The exhaust-side spool valve 26 is controlled by the exhaust-side solenoid 53, to supply oil to be supplied from the exhaust cam shaft internal oil passage 68 to the advanced angle chambers or the retarded angle chambers in the exhaust-side valve timing adjustment device 16.

The exhaust-side cam cap internal oil passage 65 is installed side by side with the exhaust-side cam cap internal oil passage 66 in the left-right direction of the engine 1, and is installed on the opposite side to the exhaust-side bearing portion 18 with respect to the intake-side bearing portion 17.

In other words, the intake-side cam cap internal oil passage 65 is installed on the intake-side wall 4B side with respect to the intake-side bearing portion 17, and the exhaust-side cam cap internal oil passage 66 is installed between the intake-side bearing portion 17 and the exhaust-side bearing portion 18.

The intake-side cam cap internal oil passage 65 and the exhaust-side cam cap internal oil passage 66 are installed side by side in the left-right direction of the engine 1 at the same height position, and the length of the intake-side cam cap internal oil passage 65 in the left-right direction of the engine 1 is made smaller than the length of the exhaust-side cam cap internal oil passage 66 in the left-right direction of the engine 1.

In the present embodiment, the intake-side head oil passage 63, the intake-side cam cap internal oil passage 65, and the intake cam shaft internal oil passage 67 constitute an intake-side hydraulic control valve oil passage, and the exhaust-side head oil passage 64, the exhaust-side cam cap internal oil passage 66, and the exhaust cam shaft internal oil passage 68 constitute an exhaust-side hydraulic control valve oil passage.

As illustrated in Figure 7 and Figure 9, the second intake-side head oil passage 63B is provided with a sensor attachment boss 69, and a sensor hole portion 69a is provided in the sensor attachment boss 69. A hydraulic pressure sensor 70 is inserted into the sensor hole portion 69a, and the hydraulic pressure sensor 70 is attached to the sensor attachment boss 69. That is, the hydraulic pressure sensor 70 is attached to the first intake-side head oil passage 63A.

The hydraulic pressure sensor 70 detects a pressure (hydraulic pressure) of oil flowing through the second intake-side head oil passage 63B, and transmits a signal to a controller not illustrated.

The controller controls the intake-side solenoid 52 and the exhaust-side solenoid 53 based on the hydraulic pressure sensor 70, and adjusts a rotational phase of the intake cam shaft 11 relative to the crankshaft 7 and a rotational phase of the exhaust cam shaft 12 relative to the crankshaft 7.

As illustrated in Figure 6, in the second intake-side head oil passage 63B, an upper end portion 63b is positioned on the intake-side wall 4B side with respect to the bolt attachment bosses 31 and 32.

As illustrated in Figure 5, the second intake-side head oil passage 63B is positioned on the opposite side to the intake-side valve timing adjustment device 15 with respect to the bolt attachment bosses 31 and 32 in the axial direction of the intake cam shaft 11, and is adjacent to the bolt attachment boss 31 in the left-right direction of the engine 1.

As illustrated in Figure 6 and Figure 7, the second intake-side head oil passage 63B is inclined to come closer to the intake-side wall 4B toward a lower end portion 63c from the upper end portion 63b, and extends diagonally upward left toward the intake-side bearing portion 17 from the outer end portion 63a of the first intake-side head oil passage 63A.

As illustrated in Figure 6 and Figure 8, the bolt attachment bosses 31 and 32 protrude toward the intake-side valve timing adjustment device 15 from the front wall 4A in the axial direction of the intake cam shaft 11, and a space 71 is formed below the bolt attachment bosses 31 and 32.

As illustrated in Figure 6, a sensor hole portion 69a protrudes to the side closer to the bolt attachment bosses 31 and 32 than an outer wall 63d of the second intake-side head oil passage 63B, and extends to the side closer to the bolt attachment bosses 31 and 32 than the second intake-side head oil passage 63B.

The space 71 is formed between the sensor attachment boss 69 and the bolt attachment bosses 31 and 32, and the sensor attachment boss 69 protrudes toward the space 71 from the second intake-side head oil passage 63B.

As illustrated in Figure 6 and Figure 7, the front wall 4A is provided with a first communication oil passage 72, a second communication oil passage 73, an intake-side lash adjuster oil passage 74, and an exhaust-side lash adjuster oil passage 75. The intake-side lash adjuster oil passage 74 and the exhaust-side lash adjuster oil passage 75 in the present embodiment constitute a lash adjuster oil passage.

The first communication oil passage 72 allows the exhaust-side cam cap internal oil passage 66 and the intake-side lash adjuster oil passage 74 to communicate with each other. The intake-side lash adjuster oil passage 74 extends in a front-rear direction of the cylinder head 4, and supplies operating oil to an intake-side lash adjuster 36A (see Figure 5).

The second communication oil passage 73 allows the exhaust-side cam cap internal oil passage 66 and the exhaust-side lash adjuster oil passage 75 to communicate with each other. The exhaust-side lash adjuster oil passage 75 extends parallel to the intake-side lash adjuster oil passage 74 in the front-rear direction of the cylinder head 4, and supplies operating oil to an exhaust-side lash adjuster 36B (see Figure 5).

As illustrated in Figure 2 and Figure 4, the intake-side lash adjuster 36A is installed in the vicinity of the intake cam shaft 11. Specifically, the intake-side lash adjuster 36A is installed closer to the intake cam shaft 11 than the exhaust cam shaft 12.

An intake-side rocker arm not illustrated is installed in the cylinder head 4. The intake-side rocker arm is swung upon being pressed by the intake cam 11A. The intake-side lash adjuster 36A supports one end of the intake-side rocker arm, and adjusts a valve clearance (a clearance between the intake-side rocker arm and an intake valve not illustrated) by a hydraulic pressure.

The exhaust-side lash adjuster 36B is installed in the vicinity of the exhaust cam shaft 12. Specifically, the exhaust-side lash adjuster 36B is installed closer to the exhaust cam shaft 12 than the intake cam shaft 11.

An exhaust-side rocker arm not illustrated is installed in the cylinder head 4. The exhaust-side rocker arm is swung upon being pressed by the exhaust cam 12A. The exhaust-side lash adjuster 36B supports one end of the exhaust-side rocker arm, and adjusts a valve clearance (a clearance between the exhaust-side rocker arm and an exhaust valve not illustrated) by a hydraulic pressure.

As illustrated in Figure 6 and Figure 7, the exhaust-side head oil passage 64 extends between the intake-side lash adjuster oil passage 74 and the exhaust-side lash adjuster oil passage 75 from the main oil passage 62 and leads to the exhaust-side cam cap internal oil passage 66. In other words, the exhaust-side head oil passage 64 is sandwiched from both sides in the left-right direction of the engine 1 by the intake-side lash adjuster oil passage 74 and the exhaust-side lash adjuster oil passage 75.

Then, an effect of the oil passage structure of the engine 1 according to the present embodiment will be described.

The oil passage structure of the engine 1 according to the present embodiment includes the main oil passage 62 provided on the front wall 4A of the cylinder head 4 and to be supplied with oil from the oil pump 35, and the intake-side lash adjuster oil passage 74 and the exhaust-side lash adjuster oil passage 75 that respectively supply oil to the intake-side lash adjuster 36A and the exhaust-side lash adjuster 36B from the main oil passage 62.

The oil passage structure of the engine 1 according to the present embodiment includes an intake-side hydraulic control valve oil passage including the intake-side head oil passage 63 that supplies oil to the intake-side spool valve 25 from the main oil passage 62 through the intake-side cam cap internal oil passage 65 formed in the cam cap 14 and the intake cam shaft internal oil passage 67 formed in the intake cam shaft 11.

Further, the oil passage structure of the engine 1 according to the present embodiment includes an exhaust-side hydraulic control valve oil passage including the exhaust-side head oil passage 64 that supplies oil to the exhaust-side spool valve 26 from the main oil passage 62 through the exhaust-side cam cap internal oil passage 66 formed in the cam cap 14 and the exhaust cam shaft internal oil passage 68 provided in the exhaust cam shaft 12.

The intake-side cam cap internal oil passage 65 is installed on the opposite side to the exhaust-side bearing portion 18 with respect to the intake-side bearing portion 17, and the exhaust-side cam cap internal oil passage 66 is installed between the intake-side bearing portion 17 and the exhaust-side bearing portion 18.

The intake-side head oil passage 63 branches off from the main oil passage 62 and communicates with the intake-side cam cap internal oil passage 65, and the exhaust-side head oil passage 64 branches off from the main oil passage 62 and communicates with the exhaust-side cam cap internal oil passage 66.

In addition thereto, the intake-side lash adjuster oil passage 74 and the exhaust-side lash adjuster oil passage 75 communicate with the exhaust-side cam cap internal oil passage 66, respectively, by the first communication oil passage 72 and the second communication oil passage 73, and the hydraulic pressure sensor 70 is attached to the intake-side head oil passage 63.

Thus, the oil passage structure of the engine 1 according to the present embodiment allows the intake-side lash adjuster oil passage 74 and the exhaust-side lash adjuster oil passage 75 to communicate with the exhaust-side cam cap internal oil passage 66, thereby making it possible to prevent at least the intake-side lash adjuster oil passage 74 from branching off from the first intake-side head oil passage 63A or the second intake-side head oil passage 63B.

This makes it possible to prevent a hydraulic pressure in the intake-side head oil passage 63 from decreasing by supplying oil to the intake-side lash adjuster oil passage 74 and the exhaust-side lash adjuster oil passage 75.

As a result, after the engine 1 is started, the hydraulic pressure in the intake-side head oil passage 63 can be more quickly increased than a hydraulic pressure in the exhaust-side head oil passage 64.

In addition thereto, the hydraulic pressure sensor 70 is attached to the intake-side head oil passage 63. Thus, the hydraulic pressure in the intake-side head oil passage 63 to be formed close to the intake-side spool valve 25 can be detected, and a hydraulic pressure to be supplied to the intake-side spool valve 25 can be accurately detected.

Accordingly, the oil pump 35 feeds oil into the oil passage 61 after the engine 1 is started, and the controller can accurately determine that a pressure in the hydraulic pressure sensor 70 reaches a predetermined pressure, output a driving signal to the intake-side solenoid 52, and early operate the intake-side valve timing adjustment device 15.

As described above, the oil passage structure of the engine 1 according to the present embodiment can quickly operate the intake-side valve timing adjustment device 15 after starting the engine 1, making it possible to reduce exhaust gas and reduce fuel consumption.

With the oil passage structure of the engine 1 according to the present embodiment, the cylinder head 4 has the intake-side wall 4B that is provided on a side surface in the width direction perpendicular to the axial direction of the crankshaft 7 and to which the intake manifold 9 is connected.

The intake-side head oil passage 63 includes the first intake-side head oil passage 63A extending toward the intake-side wall 4B from the main oil passage 62 and the second intake-side head oil passage 63B extending upward from the outer end portion 63a in the direction in which the first intake-side head oil passage 63A extends and leading to the intake-side cam cap internal oil passage 65, and the hydraulic pressure sensor 70 is attached to the second intake-side head oil passage 63B.

As a result, the hydraulic pressure sensor 70 can be installed in the second intake-side head oil passage 63B installed closer to the intake-side cam cap internal oil passage 65 (i.e., the intake-side spool valve 25) than the first intake-side head oil passage 63A.

Accordingly, a hydraulic pressure can be detected by the hydraulic pressure sensor 70 at a position close to the intake-side spool valve 25, and a hydraulic pressure to be supplied to the intake-side spool valve 25 can be more accurately detected by the hydraulic pressure sensor 70.

The oil passage structure of the engine 1 according to the present embodiment includes the intake-side lash adjuster oil passage 74 that communicates with the exhaust-side cam cap internal oil passage 66 via the first communication oil passage 72 and supplies oil to the intake-side lash adjuster 36A and the exhaust-side lash adjuster oil passage 75 that communicates with the exhaust-side cam cap internal oil passage 66 via the second communication oil passage 73 and supplies oil to the exhaust-side lash adjuster 36B.

In addition thereto, the exhaust-side head oil passage 64 is formed coaxially with the main oil passage 62, and extends between the intake-side lash adjuster oil passage 74 and the exhaust-side lash adjuster oil passage 75 from the main oil passage 62 and leads to the exhaust-side cam cap internal oil passage 66.

As a result, the length of the exhaust-side head oil passage 64 is reduced so that a movement distance of oil flowing through the exhaust-side head oil passage 64 can be reduced.

Accordingly, after the engine 1 is started, oil can be quickly supplied to the intake-side lash adjuster oil passage 74 and the exhaust-side lash adjuster oil passage 75 from the exhaust-side head oil passage 64 through the exhaust-side cam cap internal oil passage 66, the first communication oil passage 72, and the second communication oil passage 73.

As a result, the intake-side valve timing adjustment device 15 can be more quickly operated after the engine 1 is started, making it possible to more effectively reduce exhaust gas and reduce fuel consumption.

Although the embodiment of the present invention has been disclosed, it will be apparent that adjustments can be made by those skilled in the art without departing from the scope of the present invention as defined in the following claims.

### [Reference Signs List]

1...engine (internal combustion engine), 4...cylinder head, 4A...front wall (end wall), 4B...intake-side wall, 7 ... crankshaft, 9...intake manifold, 11...intake cam shaft, 12...exhaust cam shaft, 14...cam cap, 15...intake-side valve timing adjustment device, 16...exhaust-side valve timing adjustment device, 17...intake-side bearing portion, 18...exhaust-side bearing portion, 23...intake-side housing member (intake-side actuator), 23A...intake-side vane rotor (intake-side actuator), 24... exhaust-side housing member (exhaust-side actuator), 24A...exhaust-side vane rotor (exhaust-side actuator), 25...intake-side spool valve (intake-side hydraulic control valve), 26...exhaust-side spool valve (exhaust-side hydraulic control valve), 62...main oil passage, 63...intake-side head oil passage (intake-side hydraulic control valve oil passage), 63A...first intake-side head oil passage, 63a...outer end portion (outer end portion of first intake-side head oil passage), 63B...second intake-side head oil passage, 64...exhaust-side head oil passage (exhaust-side hydraulic control valve oil passage), 65...intake-side cam cap internal oil passage (intake-side hydraulic control valve oil passage), 66...exhaust-side cam cap internal oil passage (exhaust-side hydraulic control valve oil passage), 67...intake cam shaft internal oil passage (intake-side hydraulic control valve oil passage), 68... exhaust cam shaft internal oil passage (exhaust-side hydraulic control valve oil passage), 72...first communication oil passage, 73...second communication oil passage, 70...hydraulic pressure sensor, 74...intake-side lash adjuster oil passage (lash adjuster oil passage), 75... exhaust-side lash adjuster oil passage (lash adjuster oil passage)

## Claims

1. An oil passage structure of an internal combustion engine (1) comprising:
a cylinder head (4) having an end wall (4A) provided in an end portion in an axial direction of a crankshaft (7);
a cam cap (14) provided on an upper surface of the end wall (4A);
an intake cam shaft (11) to be rotatably supported on an intake-side bearing portion (17) formed on the upper surface of the end wall (4A) and the cam cap (14);
an exhaust cam shaft (12) to be rotatably supported on an exhaust-side bearing portion (18) formed on the upper surface of the end wall (4A) and the cam cap (14);
an intake-side valve timing adjustment device (15) including an intake-side hydraulic control valve (25) provided in an end portion of the intake cam shaft (11) and an intake-side actuator (23) that is installed in an outer peripheral portion of the intake-side hydraulic control valve (25) and adjusts a rotational phase of the intake cam shaft (11) relative to the crankshaft (7) using oil to be supplied from the intake-side hydraulic control valve (25);
an exhaust-side valve timing adjustment device (16) including an exhaust-side hydraulic control valve (26) provided in an end portion of the exhaust cam shaft (12) and an exhaust-side actuator (24) that is installed in an outer peripheral portion of the exhaust-side hydraulic control valve (26) and adjusts a rotational phase of the exhaust cam shaft (12) relative to the crankshaft (7) using oil to be supplied from the exhaust-side hydraulic control valve (26);
a plurality of lash adjusters installed in the cylinder head (4) to be positioned in a vicinity of the intake cam shaft (11) and the exhaust cam shaft (12);
a main oil passage (62) provided on the end wall (4A) and to be supplied with oil from a hydraulic pressure source;
a lash adjuster oil passage that supplies oil to the plurality of lash adjusters from the main oil passage (62);
an intake-side hydraulic control valve oil passage (63) that supplies oil to the intake-side hydraulic control valve (25) from the main oil passage (62) through an intake-side cam cap internal oil passage (65) formed in the cam cap (14) and an intake cam shaft internal oil passage (67) formed in the intake cam shaft (11);
an exhaust-side hydraulic control valve oil passage (64) that supplies oil to the exhaust-side hydraulic control valve (26) from the main oil passage (62) through an exhaust-side cam cap internal oil passage (66) provided in the cam cap (14) and an exhaust cam shaft internal oil passage (68) provided in the exhaust cam shaft (12); and
a hydraulic pressure sensor (70) to be attached to the cylinder head (4), wherein
the intake-side cam cap internal oil passage (65) is installed on an opposite side to the exhaust-side bearing portion (18) with respect to the intake-side bearing portion (17),
the exhaust-side cam cap internal oil passage (66) is installed between the intake-side bearing portion (17) and the exhaust-side bearing portion (18),
the intake-side hydraulic control valve oil passage (63) includes an intake-side head oil passage (63A, 63B) provided on the end wall (4A), the intake-side head oil passage (63A, 63B) branching off from the main oil passage (62) and communicating with the intake-side cam cap internal oil passage (65),
the exhaust-side hydraulic control valve oil passage (64) includes an exhaust-side head oil passage (64) provided on the end wall (4A), the exhaust-side head oil passage (64) branching off from the main oil passage (62) and communicating with the exhaust-side cam cap internal oil passage (66),
the lash adjuster oil passage communicates with the exhaust-side cam cap internal oil passage (66) by a communication oil passage, and
the hydraulic pressure sensor (70) is attached to the intake-side head oil passage (63).

2. The oil passage structure of the internal combustion engine (1) according to claim 1, **characterized in that**
the cylinder head (4) has an intake-side wall (4B) that is provided on a side surface in a width direction perpendicular to an axial direction of the crankshaft (7) and to which an intake manifold (9) is connected,
the intake-side head oil passage (63) includes a first intake-side head oil passage (63A) extending toward the intake-side wall (4B) from the main oil passage (62) and a second intake-side head oil passage (63B) extending upward from an outer end portion (63a) in a direction in which the first intake-side head oil passage (63A) extends and leading to the intake-side cam cap internal oil passage (65), and
the hydraulic pressure sensor (70) is attached to the second intake-side head oil passage (63B).

3. The oil passage structure of the internal combustion engine (1) according to claim 1 or 2, **characterized in that**
the communication oil passage comprises a first communication oil passage (72) and a second communication oil passage (73),
the lash adjuster comprises an intake-side lash adjuster (36A) installed on a side of the intake cam shaft (11) and an exhaust-side lash adjuster (36B) installed on a side of the exhaust cam shaft (12),
the lash adjuster oil passage comprises an intake-side lash adjuster oil passage (74) that communicates with the exhaust-side cam cap internal oil passage (66) via the first communication oil passage (72) and supplies oil to the intake-side lash adjuster (36A) and an exhaust-side lash adjuster oil passage (75) that communicates with the exhaust-side cam cap internal oil passage (66) via the second communication oil passage (73) and supplies oil to the exhaust-side lash adjuster (36B), and
the exhaust-side head oil passage (64) is formed coaxially with the main oil passage (62), and extends between the intake-side lash adjuster oil passage (74) and the exhaust-side lash adjuster oil passage (75) from the main oil passage (62) and leads to the exhaust-side cam cap internal oil passage (66).

## Patentansprüche

1. Öldurchflussstruktur eines Verbrennungsmotors (1), umfassend:
einen Zylinderkopf (4), der eine Stirnwand (4A) aufweist, die in einem Endabschnitt in einer axialen Richtung einer Kurbelwelle (7) bereitgestellt ist;
eine Nockenkappe (14), die an einer oberen Fläche der Stirnwand (4A) bereitgestellt ist;
eine Einlassnockenwelle (11), die drehbar an einem einlassseitigen Lagerabschnitt (17) gelagert ist, der an der oberen Fläche der Stirnwand (4A) und der Nockenkappe (14) gebildet ist;
eine Auslassnockenwelle (12), die drehbar an einem auslassseitigen Lagerabschnitt (18) gelagert ist, der an der oberen Fläche der Stirnwand (4A) und der Nockenkappe (14) gebildet ist;
eine einlassseitige Ventilsteuerzeiteinstellvorrichtung (15), beinhaltend ein einlassseitiges hydraulisches Steuerventil (25), das in einem Endabschnitt der Einlassnockenwelle (11) bereitgestellt ist, und einen einlassseitigen Aktuator (23), der in einem äußeren Umfangsabschnitt des einlassseitigen hydraulischen Steuerventils (25) installiert ist und eine Drehphase der Einlassnockenwelle (11) relativ zur Kurbelwelle (7) unter Verwendung von Öl, das von dem einlassseitigen hydraulischen Steuerventil (25) zugeführt wird, einstellt;
eine auslassseitige Ventilsteuerzeiteinstellvorrichtung (16), beinhaltend ein auslassseitiges hydraulisches Steuerventil (26), das in einem Endabschnitt der Auslassnockenwelle (12) bereitgestellt ist, und einen auslassseitigen Aktuator (24), der in einem äußeren Umfangsabschnitt des auslassseitigen hydraulischen Steuerventils (26) installiert ist und eine Drehphase der Auslassnockenwelle (12) relativ zur Kurbelwelle (7) unter Verwendung von Öl, das von dem auslassseitigen hydraulischen Steuerventil (26) zugeführt wird, einstellt;
eine Vielzahl von im Zylinderkopf (4) installierten Spieleinstellern, die in einer Nähe der Einlassnockenwelle (11) und der Auslassnockenwelle (12) zu positionieren sind;
einen Hauptöldurchfluss (62), der an der Stirnwand (4A) bereitgestellt ist und dem Öl aus einer hydraulischen Druckquelle zuzuführen ist;
einen Spieleinstelleröldurchfluss, der Öl zu der Vielzahl von Spieleinstellern aus dem Hauptöldurchfluss (62) zuführt;
einen einlassseitigen hydraulischen Steuerventilöldurchfluss (63), der Öl zu dem einlassseitigen hydraulischen Steuerventil (25) aus dem Hauptöldurchfluss (62) durch einen einlassseitigen im Inneren der Nockenkappe verlaufenden Öldurchfluss (65), der in der Nockenkappe (14) gebildet ist, und einen im Inneren der Einlassnockenwelle verlaufenden Öldurchfluss (67), der in der Einlassnockenwelle (11) gebildet ist, zuführt;
einen auslassseitigen hydraulischen Steuerventilöldurchfluss (64), der Öl zu dem auslassseitigen hydraulischen Steuerventil (26) aus dem Hauptöldurchfluss (62) durch einen auslassseitigen im Inneren der Nockenkappe verlaufenden Öldurchfluss (66), der in der Nockenkappe (14) gebildet ist, und einen im Inneren der Auslassnockenwelle verlaufenden Öldurchfluss (68), der in der Auslassnockenwelle (12) bereitgestellt ist, zuführt; und
einen Hydraulikdrucksensor (70), der an dem Zylinderkopf (4) anzubringen ist, wobei
der einlassseitige im Inneren der Nockenkappe verlaufende Öldurchfluss (65) auf einer dem auslassseitigen Lagerabschnitt (18) gegenüberliegenden Seite in Bezug zu dem einlassseitigen Lagerabschnitt (17) installiert ist,
der auslassseitige im Inneren der Nockenkappe verlaufende Öldurchfluss (66) zwischen dem einlassseitigen Lagerabschnitt (17) und dem auslassseitigen Lagerabschnitt (18) installiert ist,
der einlassseitige hydraulische Steuerventilöldurchfluss (63) einen einlassseitigen Kopföldurchfluss (63A, 63B) beinhaltet, der an der Stirnwand (4A) bereitgestellt ist, wobei der einlassseitige Kopföldurchfluss (63A, 63B) von dem Hauptöldurchfluss (62) abzweigt und mit dem einlassseitigen im Inneren der Nockenkappe verlaufenden Öldurchfluss (65) verbunden ist,
der auslassseitige hydraulische Steuerventilöldurchfluss (64) einen auslassseitigen Kopföldurchfluss (64) beinhaltet, der an der Stirnwand (4A) bereitgestellt ist, wobei der auslassseitige Kopföldurchfluss (64) von dem Hauptöldurchfluss (62) abzweigt und mit dem auslassseitigen im Inneren der Nockenkappe verlaufenden Öldurchfluss (66) verbunden ist,
der Spieleinstelleröldurchfluss mit dem auslassseitigen im Inneren der Nockenkappe verlaufenden Öldurchfluss (66) durch einen Verbindungsöldurchfluss verbunden ist, und
der Hydraulikdrucksensor (70) an dem einlassseitigen Kopföldurchfluss (63) angebracht ist.

2. Öldurchflussstruktur des Verbrennungsmotors (1) nach Anspruch 1, **dadurch gekennzeichnet, dass**
der Zylinderkopf (4) eine einlassseitige Wand (4B) aufweist, die an einer Seitenfläche in einer Breitenrichtung senkrecht zu einer Axialrichtung der Kurbelwelle (7) bereitgestellt ist und an die ein Einlasskrümmer (9) angeschlossen ist,
der einlassseitige Kopföldurchfluss (63) einen ersten einlassseitigen Kopföldurchfluss (63A) beinhaltet, der sich von dem Hauptöldurchfluss (62) zu der einlassseitigen Wand (4B) hin erstreckt, und einen zweiten einlassseitigen Kopföldurchfluss (63B), der sich von einem äußeren Endabschnitt (63a) in einer Richtung, in der sich der erste einlassseitige Kopföldurchfluss (63A) erstreckt und zu dem einlassseitigen im Inneren der Nockenkappe verlaufenden Öldurchfluss (65) führt, nach oben erstreckt, und
der Hydraulikdrucksensor (70) an dem zweiten einlassseitigen Kopföldurchfluss (63B) angebracht ist.

3. Öldurchflussstruktur des Verbrennungsmotors (1) nach Anspruch 1 oder 2, **dadurch gekennzeichnet, dass**
der Verbindungsöldurchfluss einen ersten Verbindungsöldurchfluss (72) und einen zweiten Verbindungsöldurchfluss (73) umfasst,
der Spieleinsteller einen einlassseitigen Spieleinsteller (36A), der auf einer Seite der Einlassnockenwelle (11) installiert ist, und einen auslassseitigen Spieleinsteller (36B), der auf einer Seite der Auslassnockenwelle (12) installiert ist, umfasst,
der Spieleinstelleröldurchfluss einen einlassseitigen Spieleinstelleröldurchfluss (74) umfasst, der mit dem auslassseitigen im Inneren der Nockenkappe verlaufenden Öldurchfluss (66) über den ersten Verbindungsöldurchfluss (72) verbunden ist und dem einlassseitigen Spieleinsteller (36A) Öl zuführt, und einen auslassseitigen Spieleinstelleröldurchfluss (75), der mit dem auslassseitigen im Inneren der Nockenkappe verlaufenden Öldurchfluss (66) über den zweiten Verbindungsöldurchfluss (73) verbunden ist und dem auslassseitigen Spieleinsteller (36B) Öl zuführt, und
der auslassseitige Kopföldurchfluss (64) koaxial zum Hauptöldurchfluss (62) gebildet ist und sich zwischen dem einlassseitigen Spieleinstelleröldurchfluss (74) und dem auslassseitigen Spieleinstelleröldurchfluss (75) von dem Hauptöldurchfluss (62) erstreckt und zu dem auslassseitigen im Inneren der Nockenkappe verlaufenden Öldurchfluss (66) führt.

## Revendications

1. Structure de passage d'huile d'un moteur à combustion interne (1) comprenant :
une culasse (4) présentant une paroi d'extrémité (4A) fournie dans une partie d'extrémité dans une direction axiale d'un vilebrequin (7) ;
un capuchon de came (14) fourni sur une surface supérieure de la paroi d'extrémité (4A) ;
un arbre à cames d'admission (11) destiné à être supporté de manière rotative sur une partie d'appui côté admission (17) formée sur la surface supérieure de la paroi d'extrémité (4A) et du capuchon de came (14) ;
un arbre à cames d'échappement (12) destiné à être supporté de manière rotative sur une partie d'appui côté échappement (18) formée sur la surface supérieure de la paroi d'extrémité (4A) et du capuchon de came (14) ;
un dispositif de réglage de synchronisation de soupape côté admission (15) comportant une soupape de commande hydraulique côté admission (25) fournie dans une partie d'extrémité de l'arbre à cames d'admission (11) et un actionneur côté admission (23) qui est installé dans une partie périphérique externe de la soupape de commande hydraulique côté admission (25) et règle une phase de rotation de l'arbre à cames d'admission (11) par rapport au vilebrequin (7) à l'aide d'huile destinée à être fournie depuis la soupape de commande hydraulique côté admission (25) ;
un dispositif de réglage de synchronisation de soupape côté échappement (16) comportant une soupape de commande hydraulique côté échappement (26) fournie dans une partie d'extrémité de l'arbre à cames d'échappement (12) et un actionneur côté échappement (24) qui est installé dans une partie périphérique externe de la soupape de commande hydraulique côté échappement (26) et règle une phase de rotation de l'arbre à cames d'échappement (12) par rapport au vilebrequin (7) à l'aide d'huile destinée à être fournie depuis la soupape de commande hydraulique côté échappement (26) ;
une pluralité de rattrapeurs de jeu installés dans la culasse (4) destinés à être positionnés à proximité de l'arbre à cames d'admission (11) et de l'arbre à cames d'échappement (12) ;
un passage d'huile principal (62) fourni sur la paroi d'extrémité (4A) et destiné à être alimenté en huile depuis une source de pression hydraulique ;
un passage d'huile de rattrapeur de jeu qui fournit de l'huile à la pluralité de rattrapeurs de jeu depuis le passage d'huile principal (62) ;
un passage d'huile de soupape de commande hydraulique côté admission (63) qui fournit de l'huile à la soupape de commande hydraulique côté admission (25) depuis le passage d'huile principal (62) à travers un passage d'huile interne de capuchon de came côté admission (65) formé dans le capuchon de came (14) et un passage d'huile interne d'arbre à cames d'admission (67) formé dans l'arbre à cames d'admission (11) ;
un passage d'huile de soupape de commande hydraulique côté échappement (64) qui fournit de l'huile à la soupape de commande hydraulique côté échappement (26) depuis le passage d'huile principal (62) à travers un passage d'huile interne de capuchon de came côté échappement (66) fourni dans le capuchon de came (14) et un passage d'huile interne d'arbre à cames d'échappement (68) fourni dans l'arbre à cames d'échappement (12) ; et
un capteur de pression hydraulique (70) destiné à être fixé à la culasse (4), dans laquelle
le passage d'huile interne de capuchon de came côté admission (65) est installé sur un côté opposé à la partie d'appui côté échappement (18) par rapport à la partie d'appui côté admission (17),
le passage d'huile interne de capuchon de came côté échappement (66) est installé entre la partie d'appui côté admission (17) et la partie d'appui côté échappement (18),
le passage d'huile de soupape de commande hydraulique côté admission (63) comporte un passage d'huile de tête côté admission (63A, 63B) fourni sur la paroi d'extrémité (4A), le passage d'huile de tête côté admission (63A, 63B) bifurquant depuis le passage d'huile principal (62) et communiquant avec le passage d'huile interne de capuchon de came côté admission (65),
le passage d'huile de soupape de commande hydraulique côté échappement (64) comporte un passage d'huile de tête côté échappement (64) fourni sur la paroi d'extrémité (4A), le passage d'huile de tête côté échappement (64) bifurquant depuis le passage d'huile principal (62) et communiquant avec le passage d'huile interne de capuchon de came côté échappement (66),
le passage d'huile de rattrapeur de jeu communique avec le passage d'huile interne de capuchon de came côté échappement (66) par un passage d'huile de communication, et
le capteur de pression hydraulique (70) est fixé au passage d'huile de tête côté admission (63).

2. Structure de passage d'huile du moteur à combustion interne (1) selon la revendication 1, **caractérisée en ce que**
la culasse (4) présente une paroi côté admission (4B) qui est fournie sur une surface latérale dans une direction de largeur perpendiculaire à une direction axiale du vilebrequin (7) et à laquelle est relié un collecteur d'admission (9),
le passage d'huile de tête côté admission (63) comporte un premier passage d'huile de tête côté admission (63A) s'étendant vers la paroi côté admission (4B) depuis le passage d'huile principal (62) et un second passage d'huile de tête côté admission (63B) s'étendant vers le haut depuis une partie d'extrémité externe (63a) dans une direction dans laquelle le premier passage d'huile de tête côté admission (63A) s'étend et menant au passage d'huile interne de capuchon de came côté admission (65), et
le capteur de pression hydraulique (70) est fixé au second passage d'huile de tête côté admission (63B).

3. Structure de passage d'huile du moteur à combustion interne (1) selon la revendication 1 ou 2, **caractérisée en ce que**
le passage d'huile de communication comprend un premier passage d'huile de communication (72) et un second passage d'huile de communication (73),
le rattrapeur de jeu comprend un rattrapeur de jeu côté admission (36A) installé sur un côté de l'arbre à cames d'admission (11) et un rattrapeur de jeu côté échappement (36B) installé sur un côté de l'arbre à cames d'échappement (12),
le passage d'huile de rattrapeur de jeu comprend un passage d'huile de rattrapeur de jeu côté admission (74) qui communique avec le passage d'huile interne de capuchon de came côté échappement (66) par l'intermédiaire du premier passage d'huile de communication (72) et fournit de l'huile au rattrapeur de jeu côté admission (36A) et un passage d'huile de rattrapeur de jeu côté échappement (75) qui communique avec le passage d'huile interne de capuchon de came côté échappement (66) par l'intermédiaire du second passage d'huile de communication (73) et fournit de l'huile au rattrapeur de jeu côté échappement (36B), et
le passage d'huile de tête côté échappement (64) est formé coaxialement au passage d'huile principal (62), et s'étend entre le passage d'huile de rattrapeur de jeu côté admission (74) et le passage d'huile de rattrapeur de jeu côté échappement (75) depuis le passage d'huile principal (62) et mène au passage d'huile interne de capuchon de came côté échappement (66).
